# EUROPÄISCHE PATENTSCHRIFT

(11) **EP 1 251 254 B1**
(45) Veröffentlichungstag und Bekanntmachung des Hinweises auf die Patenterteilung: **18.10.2006**
(21) Anmeldenummer: 02450085.2
(22) Anmeldetag: 11.04.2002
(51) Int. Cl.: F02B 31/02, F02F 1/38

(54) **Viertakt-Brennkraftmaschine mit drallerzeugendem Einlasskanal**
Four-stroke internal combustion engine having swirl generating intake port
Moteur à combustion interne et à quatre temps ayant un canal d'admission à tourbillon

(30) Priorität: 19.04.2001 AT 3032001 U; 27.09.2001 AT 7422001 U
(43) Veröffentlichungstag der Anmeldung: 23.10.2002
(73) Patentinhaber: AVL List GmbH, 8020 Graz (AT)
(72) Erfinder: Kapus, Paul, Dr., 8111 Judendorf (AT)
(74) Vertreter: Babeluk, Michael

(56) Entgegenhaltungen:
- EP-A- 0 444 018
- EP-A- 0 764 773
- AT-U- 2 434
- AT-U- 3 134
- US-A- 4 354 463
- US-A- 5 870 993
- PATENT ABSTRACTS OF JAPAN vol. 003, no. 045 (M-056), 17. April 1979 (1979-04-17) & JP 54 023815 A (NISSAN DIESEL MOTOR CO LTD), 22. Februar 1979 (1979-02-22)
- PATENT ABSTRACTS OF JAPAN vol. 008, no. 148 (M-308), 11. Juli 1984 (1984-07-11) & JP 59 046309 A (TOYO KOGYO KK), 15. März 1984 (1984-03-15)

## Beschreibung

Die Erfindung betrifft eine Viertakt-Brennkraftmaschine mit mindestens einem Einlassventil zur Steuerung eines drallerzeugenden Einlasskanals und zumindest einem Auslassventil zur Steuerung eines Auslasskanals pro Zylinder, wobei durch Verändern der Steuerzeiten des Einlassventils und/oder des Auslassventils Abgas aus dem Auslasskanal in den Zylinder rückgeführt werden kann, wobei der Auslasskanal für das in den Brennraum rückströmende Abgas als drallerzeugender Kanal ausgebildet ist und/oder dass im Bereich der Auslassöffnung des Auslasskanals in den Brennraum mindestens eine einen Drall des rückströmenden Abgases im Brennraum zumindest unterstützende Einrichtung angeordnet ist, welche vorzugsweise durch zumindest eine bogenförmige Abschirmkante im Bereich der Brennraumdecke auf einer Seite der Auslassöffnung gebildet ist, wobei der Einlasskanal, und vorzugsweise auch der Auslasskanal, für in den Brennraum strömende Gase als Tangentialkanal ausgebildet ist, und wobei zumindest im Teillastbereich die Einlasssteuerzeit und die Auslasssteuerzeit synchron nach spät verstellbar sind.

Aus der AT 003 134 U1 ist ein Verfahren zum Betreiben einer fremdgezündeten Viertaktbrennkraftmaschine mit einem Einlassventil und einem Auslassventil pro Zylinder bekannt, welche über eine gemeinsame Nockenwelle betätigt werden. Im Teillastbereich wird durch eine Phasenverstellung der Nockenwelle der Auslass- und Einlassschluss in Richtung spät verschoben. Dadurch kommt es zu einer Entdrosselung sowie zu einer inneren Abgasrückführung. Dies ermöglicht einerseits eine Verringerung der Emissionen und andererseits eine Verbesserung des Kraftstoffverbrauchs.

Weiters ist es bekannt, im Teillastbereich einen Drall der Einlassströmung im Brennraum zu generieren, um den Kraftstoffverbrauch zu senken. Bei Volllast hingegen ist zur Erzielung der maximalen Leistung ein möglichst hoher Füllungsgrad ohne Drall gewünscht. Diese Flexibilität - drallbehaftete Einlassströmung bei Teillast, dralllose Einlassströmung mit hohem Durchfluss bei Volllast - kann bei Brennkraftmaschinen mit zwei Einlasskanälen pro Zylinder durch Kanalabschaltung während des Teillastbetriebes erzielt werden.

Aus der US 4,354,463 A ist eine Brennkraftmaschine mit einem Einlass- und einem Auslasskanal bekannt, bei der der Auslasskanal für das rückströmende Abgas als drallerzeugender Kanal ausgebildet ist. Um die Auslassöffnung ist auf einer Seite eine Abschirmkante angeordnet. Dadurch wird während der Ventilüberschneidung von Ein- und Auslass durch die rückströmende Abgasströmung ein Drall im Brennraum generiert. Es zeigt sich allerdings, dass der Drall durch Zusammenwirken von Ein- und Auslassströmung in der Praxis weit unter dem erhofften Ausmaß liegt. Dies ist einerseits auf die Kanalführung von Ein- und Auslasskanal und andererseits auf eine relativ geringe Abgasrückströmung aus dem Auslasskanal zurückzuführen.

Die US 4,905,646 A beschreibt eine Zweitakt-Brennkraftmaschine mit zwei Einlass- und zwei Auslassventilen. Durch Rücksaugen eines Teiles der Abgase aus den Auslasskanälen kann auch hier ein Drall im Brennraum erzeugt werden.

Die US 5,870,993 A beschreibt ein Verfahren und eine Vorrichtung zum Betreiben einer fremdgezündeten Brennkraftmaschine, welche pro Zylinder einen Auslasskanal aufweist, welcher über zwei Auslassventile in den Brennraum einmündet. Die Steuerzeiten des Einlass- und Auslassventils können so verändert werden, dass über den Auslasskanal eine interne Abgasrückführung in den Brennraum erfolgen kann. Durch die Form des Auslasskanals und jeweils einer im Bereich eines Auslassöffnung angeordneten drallunterstützenden Maskierung wird dem rückströmenden Abgas ein Drall aufgeprägt. Dadurch soll der Kraftstoffkonsum verringert und die HC- und CO- Emissionen ohne Benachteiligung der Leistung bei Volllast reduziert werden.

Die EP 0 444 018 A1 beschreibt eine Brennkraftmaschine mit zumindest zwei Einlassventilen je Motorzylinder und dachförmigen Begrenzungsflächen des Brennraumes im Zylinderkopf, wobei die Hauptströmungsrichtungen der über die Einlassventile in den Brennraum eingesaugten Teilströme mit der durch die Motorzylinderachsen einer Zylinderreihe bestimmten Reihe je einen spitzen Winkel einschließen. Die Strömungsmittellinie im Bereich einer Einlassöffnung spannt mit einer Einlassventilachse einen Winkel >0 auf.

Bei Brennkraftmaschinen mit nur einem Einlassventil und einem Auslassventil pro Zylinder ergibt sich die Problematik, dass bei der Auslegung des Einlasskanals ein Kompromiss zwischen Drallerzeugung bei Teillast und maximalen Durchfluss bei Volllast gefunden werden muss, wobei der Zielkonflikt besteht, dass der Durchfluss durch den Einlasskanal mit der Stärke des erzeugten Dralles abnimmt.

Aufgabe der Erfindung ist es, diese Nachteile zu vermeiden und einerseits bei Teillast niedrigen Kraftstoffverbrauch und Emissionen und andererseits bei Volllast hohe Leistung zu ermöglichen.

Erfindungsgemäß erfolgt dies dadurch, dass die Strömungsmittellinie im Bereich der Einlassöffnung mit der Einlassventilachse einen Winkel >0 und auch die Strömungsmittellinie des Auslasskanals im Bereich der Auslassöffnung mit der Auslassventilachse einen Winkel >0 aufspannt. Der Drall innerhalb des Zylinderraumes wird somit sowohl mit der asymmetrischen Rückströmung aus dem Auslasskanal, als auch mit der Einlassströmung aus dem Einlasskanal generiert. Der Grunddrall wird dabei durch den Auslass erzeugt. Dadurch ist es möglich, die Drallkomponente des Einlasskanals zu verringern, um auf diese Weise den Durchfluss durch den Einlasskanal bei Volllast zu erhöhen. Wesentlich ist, dass der Drall zufolge des rückströmenden Abgases aus dem Auslasskanal und der Drall zufolge der Frischgasströmung aus dem Einlasskanal die gleiche Orientierung aufweisen, so dass eine gegenseitige Verstärkung auftritt.

Um einen hohen Drall im Brennraum zu erreichen, ist es vorteilhaft, wenn die Strömungsmittellinie des Einlasskanals im Bereich der Einlassöffnung mit einer Zylindermittelpunkt und Ventilmittelpunkt verbindenden Geraden einen Winkel zwischen etwa 80° und 120° aufspannt. Zusätzlich ist es besonders günstig, wenn die Strömungsmittellinie des Auslasskanals im Bereich der Auslassöffnung mit einer Zylindermittelpunkt und Ventilmittelpunkt verbindenden Geraden einen Winkel zwischen etwa 80° und 120° aufspannt.

Um Strömungsverluste zufolge von Turbulenzerscheinungen zu vermeiden, ist es besonders vorteilhaft, wenn der Auslasskanal und/oder der Einlasskanal im Bereich des Ventilsitzes im Bereich der der Zylinderkopfebene nächstliegenden Kanalunterseite eine Abrisskante aufweist. Durch die Abrisskante kann insbesondere bei großen Ventilhüben ein starker Drall im Brennraum initiiert werden. Die Kanaloberseite des Auslasskanals ist möglichst flach ausgeführt, das heißt, dass der Winkel zwischen der Kanaloberseite und einer Parallelen zur Ventilachse wesentlich größer als 0°, vorzugsweise größer als 30°, ist. Dies bewirkt ein flaches Einströmen des rückgeführten Abgases in den Zylinder, was zusammen mit der seitlichen Position des Auslassventils im Brennraum einen relativ starken Drall verursacht. Um die Drallwirkung zu verstärken, kann der Auslasskanal zusätzlich im oder gegen den Sinn der Drallrichtung gekrümmt sein. Auch der Einlasskanal kann in gleicher Weise ausgebildet sein, um einen möglichst starken gemeinsamen Drall durch den Einlass- und den Auslasskanal zu initiieren.

Durch die Abschirmkante wird das Auslassventil auf einer Seite abgeschirmt und das rückströmende Abgas behindert beziehungsweise auf die andere Seite abgelenkt. Dadurch kann auf der Seite der Abschirmkante keine Rückströmung stattfinden. Die Abschirmkante ist entweder auf der dem Auslassflansch abgewandten oder der dem Auslassflansch zugewandten Seite der Auslassöffnung angeordnet, je nach dem, ob der Auslassflansch auf der Seite des Einlassflansches oder auf der dem Einlassflansch gegenüberliegenden Seite liegt. Vorteilhaft ist es, wenn die Abschirmkante zumindest abschnittsweise konzentrisch zur Auslassöffnung ausgebildet ist.

In einer äußerst bevorzugten Ausführung der Erfindung ist vorgesehen, dass die Höhe der Abschirmkante geringer ist als der maximale Hub des Auslassventils. Dadurch findet die Abschirmung der Rückströmung nur bei geringen Hüben des Auslassventils statt. Bei größeren Ventilhüben dagegen wird das Rück- und Einströmen in den Auslasskanal nicht behindert. Für eine besonders gute Abschirmung ist es vorteilhaft, wenn der Abstand zwischen Anschirmkante und dem Auslassventil etwa zwischen 0,3 bis 1,2 mm beträgt.

Gemäß der Erfindung ist somit vorgesehen, dass bei Teillast durch Veränderung der Einlasssteuerzeit und/oder der Auslasssteuerzeit eine interne Rückführung von Abgas aus dem Auslasskanal in den Zylinder durchgeführt wird, wobei während der Abgasrückführung eine asymmetrische Abgasrückführströmung generiert wird. Eine besonders einfach Ausführungsvariante der Erfindung sieht dabei vor, dass bei Teillast durch eine Phasenverstellung der Nockenwelle sowohl die Einlasssteuerzeit, als auch die Auslasssteuerzeit um einen Kurbelwinkel von etwa 30° bis 100°, vorzugsweise etwa 40° bis 80°, nach spät verschoben wird.

Bei Spätverstellung der Einlass- und Auslasssteuerzeit ergeben sich Hübe des Auslassventils, die vor oder nach dem oberen Totpunkt des Ladungswechsels zu liegen kommen. Die Auslassströmung aus dem Zylinder (bei Teillast und Volllast) wird wesentlich bestimmt von Ventilhüben größer als der halbe maximale Ventilhub des Auslassventils und sollte möglichst verlustfrei sein. Die Einströmung vom Auslasskanal in den Zylinder bei Teillast (Drallströmung während der Phase der inneren Abgasrückführung) erfolgt bei Ventilhüben kleiner als der maximale Ventilhub. Daher ist es sinnvoll, einen Drall zufolge der Abgasrückführströmung (die für den Durchfluss verlustbehaftet ist) nur bei Ventilhüben kleiner als der maximale Ventilhub des Auslassventils zu generieren. Eine Drallströmung ist im Zylinder nur dann erhöht nötig, wenn die Brennkraftmaschine mit erhöhter interner Abgasrückführung, also mit nach spät verschobener Steuerzeit, betrieben wird. Je später die Steuerzeit des Auslassventils ist, desto höher ist der Restgasgehalt im Zylinder und desto höher ist der Drallbedarf. Es ergibt sich bei kontinuierlicher Verstellung der Steuerzeit nach spät ein kontinuierlich, nicht linear ansteigender Restgasgehalt und gleichzeitig ein kontinuierlich ansteigender Drall zufolge der Abgasrückführströmung aus dem Auslasskanal (und damit ein kontinuierlich ansteigender Gesamtzylinderdrall, da der Drall zufolge der Frischgasströmung annähernd konstant ist).

Die Erfindung wird im Folgenden anhand der Figuren näher erläutert. Es zeigen
- Fig. 1: die erfindungsgemäße Brennkraftmaschine in einer ersten Ausführungsvariante in einem Schnitt durch einen Zylinder gemäß der Linie I-I in Fig. 2,
- Fig. 2: die Kanalanordnung dieser Brennkraftmaschine in einer Draufsicht auf den Zylinder,
- Fig. 3: ein Ventilhub-Kurbelwinkel-Diagramm,
- Fig. 4: eine Kanalanordnung einer erfindungsgemäßen Brennkraftmaschine in einer zweiten Ausführungsvariante in einer Draufsicht,
- Fig. 5 und 6: diese Brennkraftmaschine in Schnitten gemäß den Linien V-V und VI-VI in Fig. 4,
- Fig. 7: eine Kanalanordnung einer erfindungsgemäßen Brennkraftmaschine in einer dritten Ausführungsvariante in einer Draufsicht,
- Fig. 8 und 9: diese Brennkraftmaschine in Schnitten gemäß den Linien VIII-VIII und IX-IX in Fig. 7.

Funktionsgleiche Teile sind in den Ausführungsvarianten mit gleichen Bezugszeichen versehen.

Die Brennkraftmaschine weist einen Zylinderkopf 1 mit einem Einlassventil 2 und einem Auslassventil 3 pro Zylinder 4 auf, welche zur Steuerung einer Einlassöffnung 5 beziehungsweise einer Auslassöffnung 6 dienen. Über die Einlassöffnung 5 mündet ein Einlasskanal 7 in den Brennraum 8, von welchem über die Auslassöffnung 6 ein Auslasskanal 9 ausgeht.

Der Einlasskanal 7 ist drallerzeugend, vorteilhafterweise als Tangentialkanal, ausgebildet und erzeugt im Brennraum 8 während des Ansaughubes einen Drall D₁ um die Zylinderachse 10.

Im Teillastbereich wird während der Einlassphase eine interne Abgasrückführung durchgeführt, indem beispielsweise das Auslassventil 3 verspätet geschlossen wird. Dadurch gelangt während des Ansaughubes ein Teil des Abgases aus dem Auslasskanal 9 zurück in den Brennraum 8.

Der Auslasskanal 9 ist für das rückströmende Abgas ebenfalls drallerzeugend, vorteilhafterweise auch als Tangentialkanal ausgebildet, so dass das rückgeführte Abgas einen weiteren Drall D₂ im Brennraum 8 generiert. Wesentlich ist, dass sich die Frischgasströmung S₁ durch den Einlasskanal 7 und die Abgasrückführströmung S₂ aus dem Auslasskanal 9 nicht gegenseitig behindern. Um dies zu gewährleisten, ist der Auslasskanal 9 so geformt, dass der durch das rückgeführte Abgas generierte Drall D₂ gleich orientiert ist wie der Drall D₁ zufolge der Frischgasströmung S₁ aus dem Einlasskanal 7. Dadurch entsteht eine Verstärkung des Dralles D₁ aus dem Einlasskanal 7. Dies ermöglicht es, den Einlasskanal 7 weniger drallerzeugend, dafür auf größeren Durchfluss auszulegen, um die Leistung bei Volllast zu erhöhen, ohne Kraftstoffverbrauch und Emissionen bei Teillast zu verschlechtern.

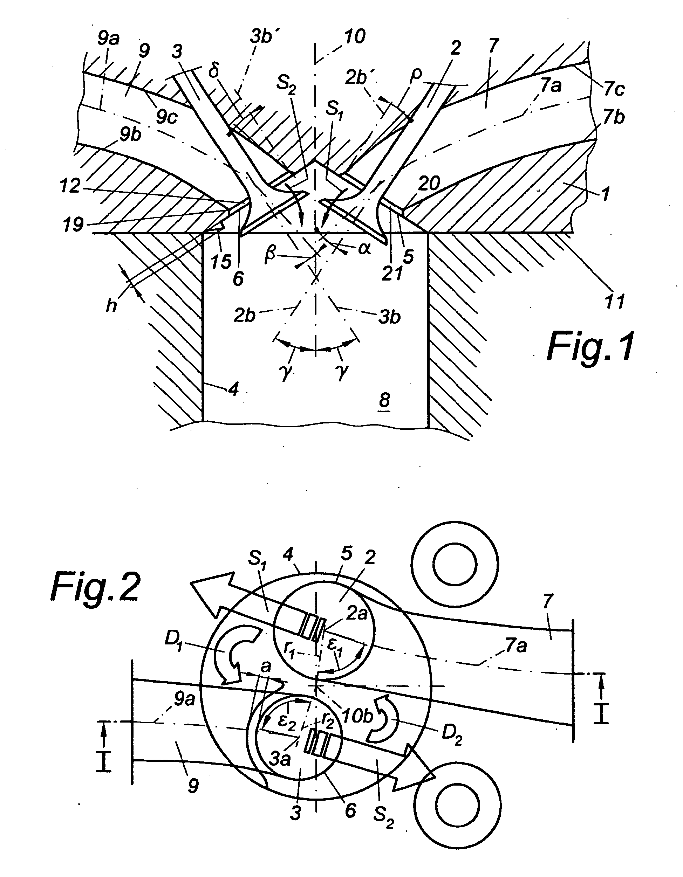

Als Tangentialkanal ist hier ein Kanal zu verstehen, dessen Strömungsmittellinie 7a, 9a im Bereich der Einlassöffnung 5 beziehungsweise Auslassöffnung 6 mit einer Zylindermittelpunkt 10b und Ventilmittelpunkt 2a, 3a verbindenden Geraden r₁, r₂ einen Winkel ε₁, ε₂ zwischen 80° und 120° aufspannt, wie in Fig. 2 angedeutet ist.

Um die gewünschte Drallwirkung zu erreichen, weist die Strömungsmittellinie 9a des Auslasskanals 9 bezüglich der Ventilachse 3b des Auslassventils 3 einen Winkel β >0° auf, welcher vorteilhafterweise mindestens 30°, bevorzugt mindestens 60° beträgt. Auch die Strömungsmittellinie 7a des Einlasskanals 7 ist um einen Winkel α zur Ventilachse 2b des Einlassventils 2 im gleichen Ausmaß geneigt. Im in den Fig. 1 und 2 gezeigten Ausführungsbeispiel weisen die Ventilachsen 2b und 3b zur Zylinderachse 10 einen Winkel γ>0, und zwar etwa 30°, auf.

Um Turbulenzen bei der Rückströmung des Abgases aus dem Auslasskanal 9 zu vermeiden und Strömungsverluste so gering wie möglich zu halten, weist die der Zylinderkopfebene 11 nächstliegende Kanalunterseite 9b im Bereich des Ventilsitzes 12 des Auslassventils 3 eine scharf ausgebildete Abrisskante 19 auf. Dadurch lässt sich insbesondere bei großen Ventilhüben H des Auslassventils 3 ein starker Drall bei der Rückströmung des Abgases erreichen. Die der Zylinderkopfebene 11 entferntere Kanaloberseite 9c ist möglichst flach ausgebildet, wobei die Kanaloberseite 9c mit einer Parallelen 3b' zur Ventilachse 3b des Auslassventils 3 im Bereich der Mündung 6 einen Winkel δ aufspannt, welcher >0°, vorzugsweise etwa 30°, beträgt. Auch die Kanaloberseite 7c spannt mit einer Parallelen 2b' zur Ventilachse 2b des Einlassventils 2 im Bereich des Ventilsitzes 21 einen Winkel p>0°, vorzugsweise>30° auf. Die bogenförmige Abschirmkante 15 bewirkt einen hohen Drall bei niedrigen Ventilhüben H des Auslassventils 3.

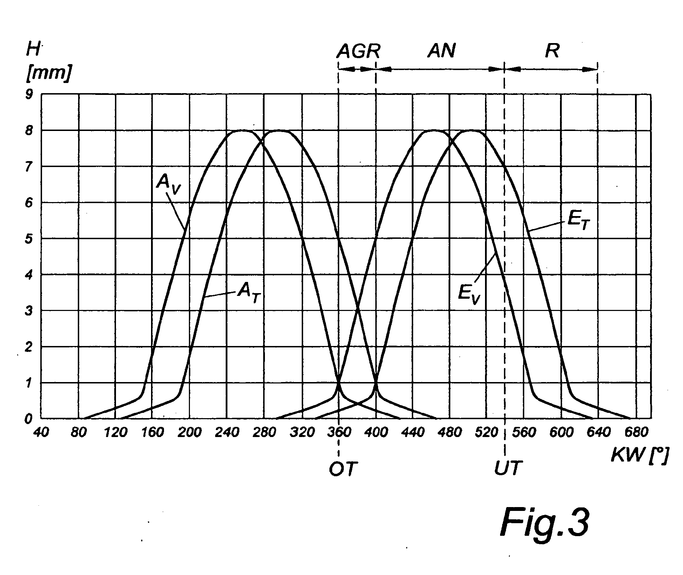

In dem in der Fig. 3 dargestellten Diagramm ist der Ventilhub H über der Kurbelstellung KW in Grad Kurbelwinkel für Einlassventil 2 und Auslassventil 3 jeweils für Volllastbetrieb und Teillastbetrieb aufgetragen. Bezugszeichen E_{T} bezeichnet den Ventilhub H des Einlassventils 2 bei Teillast, Eᵥ den Ventilhub H des Einlassventils 2 bei Volllast. Der Ventilhub H des Auslassventils 3 für Teillast beziehungsweise für Volllast ist mit A_{T} beziehungsweise Aᵥ bezeichnet. Deutlich ist zu erkennen, dass bei Teillast die Steuerzeiten des Einlassventils 2 und des Auslassventils 3 nach spät verstellt werden, wobei die Spätverstellung der Einlassnockenwelle etwa 50° beträgt, so dass der Einlassschluss bei 90° bis 140° nach dem unteren Totpunkt UT nach dem Ladungswechsel liegt. Die Steuerzeitverstellung des Auslassventilhubes erfolgt synchron mit der Verstellung des Einlassventilhubes nach spät. Durch die Verschiebung der Einasssteuerzeit nach spät wird eine Entdrosselung bewirkt, so dass während der Ausschiebphase R die überflüssige Luft im Brennraum wieder in das Saugrohr gegen Umgebungsdruck rückgeblasen wird.

Da auch die Auslasssteuerzeit synchron mit der Einlasssteuerzeit nach spät verstellt wird, so dass der Schließzeitpunkt des Auslassventils 3 nicht vor dem Öffnungszeitpunkt des Einlassventils 2 liegt, wird erreicht, dass auch das Ansaugen während der Phase AGR gegen Umgebungsdruck (Abgasdruck) erfolgt. Dadurch treten äußerst geringe Ladungswechselverluste auf. Gleichzeitig erfolgt eine innere Abgasrückführung während der Phase AGR in den Zylinder 4. Durch die beschriebene konstruktive Ausführung des Auslasskanals 9 strömt das rückgeführte Abgas mit einem Drall D₂ in den Zylinder 4. Während der Phase AN wird Luft beziehungsweise Gemisch aus dem Einlasskanal 7 in den Zylinder 4 angesaugt. Der drallerzeugend ausgebildete Einlasskanal 7 erzeugt einen weiteren Drall D₁ im Zylinder 4, welcher sich mit dem Drall D₂ überlagert. Dadurch ist möglich, den Einlasskanal 7 für weniger Drallerzeugung, aber für größeren Durchfluss auszulegen, wodurch die Höchstleistung bei Volllast erhöht werden kann, ohne dass bei Teillast ein höherer Kraftstoffverbrauch und höhere Emissionen in Kauf genommen werden müssen.

Die Verstellung der Nockenwellen erfolgt kontinuierlich. Bei geringsten Lasten erfolgt nur eine geringe Spätverstellung, da die Brennkraftmaschine noch nicht maximale Restgasmengen verträgt (Verbrennungsstabilität). Bei niedriger und mittlerer Teillast wird die Brennkraftmaschine mit maximaler Spätverstellung betrieben. Bei Erreichen des nahezu ungedrosselten Betriebes ist zu einer weiteren Erhöhung der Last wieder eine Frühverstellung der Steuerzeit nötig. Dies bedeutet, dass eine geteilte Lastregelung erfolgt:

| | |
|---|---|
| Niedrigste Last: | Gedrosselter Betrieb mit interner Abgasrückfüh- |
| | rung |
| Niedrige und mittlere Teillast: | Wenig gedrosselter bzw. nahezu ungedrosselter |
| | Betrieb mit interner Abgasrückführung |
| Höhere Teillast bis zu Volllast: | Nahezu ungedrosselter Betrieb mit Lastregelung |
| | primär durch die Steuerzeit |

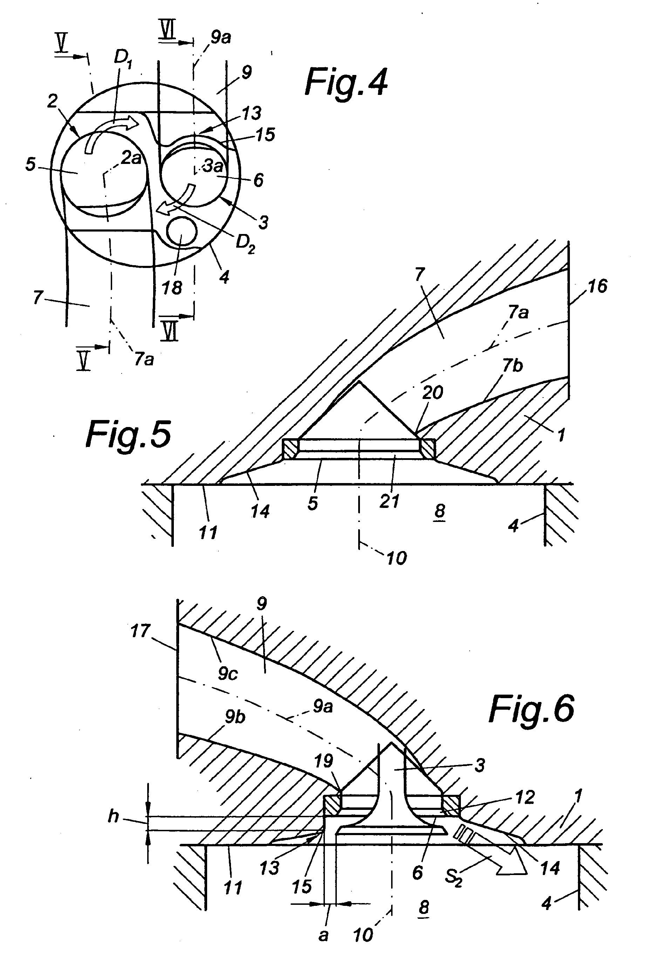

Bei den in den Figuren 4 bis 9 gezeigten Ausführungsbeispielen wird der Drall D₂ zu Folge der Abgasrückführströmung S₂ aus dem Auslasskanal 9 durch die drallerzeugende Einrichtung 13 zumindest unterstützt. Die Einrichtung 13 besteht aus einer im Bereich der Brennraumdecke 14 auf einer Seite der Auslassöffnung angeordneten bogenförmigen Abschirmkante 15, welche die Abgasrückführströmung S₂ behindert und auf die der Abschirmkante 15 entgegengesetzten Seite der Auslassöffnung 6 in den Brennraum 8 ablenkt. Die Abschirmkante 15 ist auf der dem Einlassflansch 16 abgewandten Seite der Auslassöffnung 6 angeordnet. Zur Einrichtung 13 zählt weiters die Abrisskante 19 im Bereich des Ventilsitzes 12 an der Kanalunterseite 9b des Auslasskanals 9. Auch an der Kanalsunterseite 7b des Einlasskanals 7 kann im Bereich des Ventilsitzes 21 eine Abrisskante 20 vorgesehen sein.

Die Figuren 4 bis 6 zeigen eine Ausführungsvariante, bei der der Einlassflansch 16 und der Auslassflansch 17 auf verschiedenen Seiten des Zylinderkopfes 1 angeordnet sind. Die Abschirmkante 15 befindet sich dabei auf der dem Auslassflansch 17 zugewandten Seite der Auslassöffnung 6.

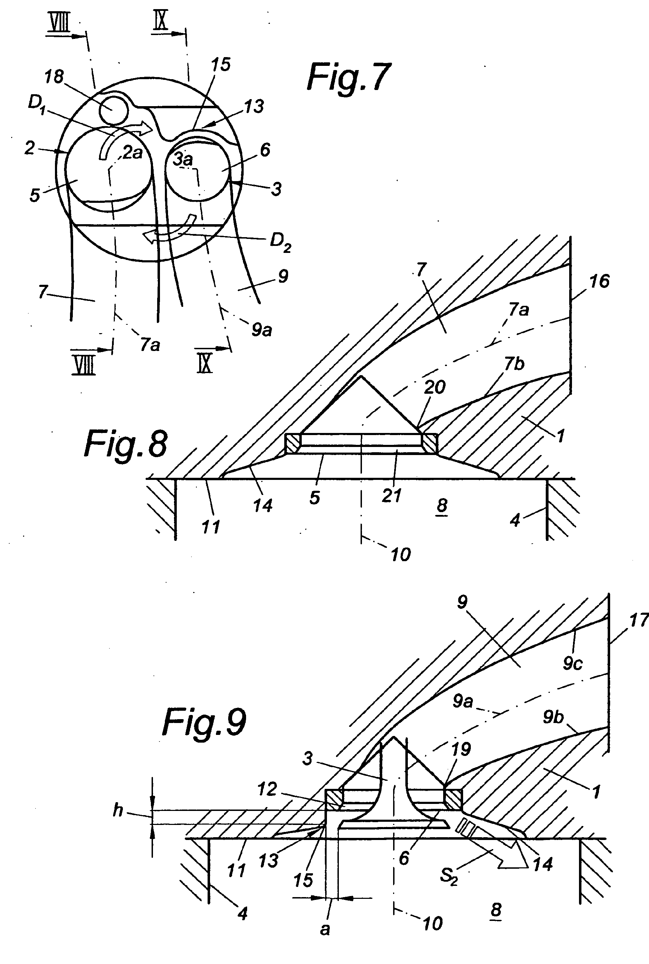

Die Figuren 7 bis 9 zeigen eine weitere Ausführungsvariante, bei der Einlassflansch 16 und der Auslassflansch 17 von der selben Längsseite des Zylinderkopfes 1 ausgehen. Die Abschirmkante 15 befindet sich in diesem Falle auf der dem Auslassflansch 17 abgewandten Seite der Auslassöffnung 6.

Die Höhe h der Abschirmkante 15 ist vorteilhafterweise kleiner als der maximale Hub H des Auslassventils 3. Der Abstand a zwischen der Abschirmkante 15 und dem Auslassventil 3 beträgt vorteilhafterweise zwischen 0,3 bis 1,2 mm. Dadurch kann bei geringen Hüben H des Auslassventils 3 maximale Abschirmung und somit maximaler Drall D₂ zu Folge der Abgasrückführströmung S₂ erzeugt werden. Bei größeren Hüben des Auslassventils 3 kann das Abgas ungehindert aus der Auslassöffnung 6 aus- beziehungsweise in die Auslassöffnung 6 einströmen. Dadurch kann erzielt werden, dass bei größeren Ventilhüben des Auslassventils 3 maximaler Durchfluss erreicht wird.

Bei Spätverstellung der Einlass- und Auslasssteuerzeit ergeben sich Hübe des Auslassventils 3, die vor oder nach dem oberen Totpunkt OT des Ladungswechsels zu liegen kommen. Die Auslassströmung aus dem Zylinder 4 (bei Teillast und Volllast) wird wesentlich bestimmt von Ventilhüben größer als der halbe maximale Ventilhub des Auslassventils 3 und sollte möglichst verlustfrei sein. Die Einströmung vom Auslasskanal 9 in den Zylinder 4 bei Teillast (Drallströmung während der Phase AGR der inneren Abgasrückführung) erfolgt bei Ventilhüben kleiner als der maximale Ventilhub. Daher ist es sinnvoll, einen Drall D₂ zufolge der Abgasrückführströmung S₂ (die für den Durchfluss verlustbehaftet ist) nur bei Ventilhüben kleiner als der maximale Ventilhub des Auslassventils 3 zu generieren. Eine Drallströmung ist im Zylinder 4 nur dann erhöht nötig, wenn die Brennkraftmaschine mit erhöhter interner Abgasrückführung, also mit nach spät verschobener Steuerzeit, betrieben wird. Je später die Steuerzeit des Auslassventils 3 ist, desto höher ist der Restgasgehalt im Zylinder 4 und desto höher ist der Drallbedarf. Es ergibt sich bei kontinuierlicher Verstellung der Steuerzeit nach spät ein kontinuierlich, nicht linear ansteigender Restgasgehalt und gleichzeitig ein kontinuierlich ansteigender Drall D₂ zufolge der Abgasrückführströmung S₂ aus dem Auslasskanal 9 (und damit ein kontinuierlich ansteigender Gesamtzylinderdrall, da der Drall D₁ zufolge der Frischgasströmung S₁ annähernd konstant ist).

Mit Bezugszeichen 18 ist eine Zündeinrichtung angedeutet.

## Patentansprüche

1. Viertakt-Brennkraftmaschine mit mindestens einem Einlassventil (2) zur Steuerung eines drallerzeugenden Einlasskanals (7) und zumindest einem Auslassventil (3) zur Steuerung eines Auslasskanals (9) pro Zylinder (4), wobei durch Verändern der Steuerzeiten des Einlassventils (2) und/oder des Auslassventils (3) Abgas aus dem Auslasskanal (9) in den Zylinder (4) rückgeführt werden kann, wobei der Auslasskanal (9) für das in den Brennraum (8) rückströmende Abgas als drallerzeugender Kanal ausgebildet ist und/oder dass im Bereich der Auslassöffnung (6) des Auslasskanals (9) in den Brennraum (8) mindestens eine einen Drall (D₂) des rückströmenden Abgases im Brennraum (8) zumindest unterstützende Einrichtung (13) angeordnet ist, welche vorzugsweise durch zumindest eine bogenförmige Abschirmkante (15) im Bereich der Brennraumdecke (14) auf einer Seite der Auslassöffnung (6) gebildet ist, wobei der Einlasskanal (7), und vorzugsweise auch der Auslasskanal (9), für in den Brennraum (8) strömende Gase als Tangentialkanal ausgebildet ist, und wobei zumindest im Teillastbereich die Einlasssteuerzeit und die Auslasssteuerzeit synchron nach spät verstellbar sind, **dadurch gekennzeichnet, dass** die Strömungsmittellinie (7a) im Bereich der Einlassöffnung (5) mit der Einlassventilachse (2b) einen Winkel (α)>0 und auch die Strömungsmittellinie (9a) des Auslasskanals (9) im Bereich der Auslassöffnung (6) mit der Auslassventilachse (3b) einen Winkel (β)>0 aufspannt.

2. Brennkraftmaschine nach Anspruch 1, **dadurch gekennzeichnet, dass** der Drall (D₂) zufolge der Abgasrückführströmung (S₂) aus dem Auslasskanal (9) und der Drall (D₁) zufolge der Frischgasströmung (S₁) aus dem Einlasskanal (7) die gleiche Orientierung aufweisen.

3. Brennkraftmaschine nach Anspruch 1 oder 2, **dadurch gekennzeichnet, dass** die Strömungsmittellinie (7a) des Einlasskanals (7) im Bereich der Einlassöffnung (5) mit einer Zylindermittelpunkt (10b) und Ventilmittelpunkt (2a) verbindenden Geraden (r₁) einen Winkel (ε₁) zwischen etwa 80° und 120° aufspannt.

4. Brennkraftmaschine nach einem der Ansprüche 1 bis 3, **dadurch gekennzeichnet, dass** die Strömungsmittellinie (9a) des Auslasskanals (9) im Bereich der Auslassöffnung (6) mit einer Zylindermittelpunkt (10b) und Ventilmittelpunkt (3a) verbindenden Geraden (r₂) einen Winkel (ε₂) zwischen etwa 80° und 120° aufspannt.

5. Brennkraftmaschine nach einem Ansprüche 1 bis 4, **dadurch gekennzeichnet, dass** der Auslasskanal (9) und/oder der Einlasskanal (7) im Bereich des Ventilsitzes (12, 21) im Bereich der der Zylinderkopfebene (11) nächstliegenden Kanalunterseite (9b, 7b) eine Abrisskante (19, 20) aufweist.

6. Brennkraftmaschine nach einem der Ansprüche 1 bis 5, **dadurch gekennzeichnet, dass** die der Zylinderkopfebene (11) entferntere Kanaloberseite (9c) des Auslasskanals (9) im Bereich des Ventilsitzes (12) mit einer Parallelen (3b') zur Ventilachse (3b) des Auslassventils (3) einen Winkel (δ) >0°, vorzugsweise >30°, einschließt.

7. Brennkraftmaschine nach einem der Ansprüche 1 bis 6, **dadurch gekennzeichnet, dass** die der Zylinderkopfebene (11) entferntere Kanaloberseite (7c) des Einlasskanals (7) im Bereich des Ventilsitzes (21) mit einer Parallelen (2b') zur Ventilachse (2b) des Einlassventils (2) einen Winkel p>0°, vorzugsweise >30°, einschließt.

8. Brennkraftmaschine nach Anspruch 1 oder 7, **dadurch gekennzeichnet, dass** die Abschirmkante (15) auf einer dem Einlassflansch (16) abgewandten Seite der Auslassöffnung (6) angeordnet ist.

9. Brennkraftmaschine nach einem der Ansprüche 1 bis 8, **dadurch gekennzeichnet, dass** die Abschirmkante (15) auf einer dem Auslassflansch (17) zugewandten Seite der Auslassöffnung (6) angeordnet ist.

10. Brennkraftmaschine nach einem der Ansprüche 1 bis 8, **dadurch gekennzeichnet, dass** die Abschirmkante (15) auf einer dem Auslassflansch (17) abgewandten Seite der Auslassöffnung (6) angeordnet ist.

11. Brennkraftmaschine nach einem der Ansprüche 1 bis 10, **dadurch gekennzeichnet, dass** die Höhe h der Abschirmkante (15) geringer ist als der maximale Hub H des Auslassventils (9).

12. Brennkraftmaschine nach einem der Ansprüche 1 bis 11, **dadurch gekennzeichnet, dass** der Abstand (a) zwischen Abschirmkante (15) und dem Auslassventil (3) etwa zwischen 0,3 bis 1,2 mm beträgt.

13. Verfahren zum Betrieb einer Brennkraftmaschine nach einem der Ansprüche 1 bis 12, **dadurch gekennzeichnet, dass** bei Teillast durch Veränderung der Einlasssteuerzeit und/oder der Auslasssteuerzeit eine interne Rückführung von Abgas aus dem Auslasskanal (9) in den Zylinder (4) durchgeführt wird, wobei während der Abgasrückführung eine asymmetrische Abgasrückführströmung (S₂) generiert wird.

14. Verfahren nach Anspruch 13, **dadurch gekennzeichnet, dass** bei Teillast durch eine Phasenverstellung der Nockenwelle sowohl die Einlasssteuerzeit, als auch die Auslasssteuerzeit um einen Kurbelwinkel (KW) von etwa 30° bis 100°, vorzugsweise etwa 40° bis 80°, nach spät verschoben wird.

## Claims

1. A four-stroke internal combustion engine, comprising at least one intake valve (2) for controlling a swirl-producing intake port (7) and at least one exhaust valve (3) for controlling an exhaust port (9) per cylinder, exhaust gas being recirculated from the exhaust port (9) to the cylinder (4) by changing the control times of the intake port (2) and/or the exhaust port (3), with the exhaust port (9) being arranged as a swirl-producing channel for the gas recirculated into the combustion chamber (8) and/or that in the area of the exhaust opening (6) of the exhaust port (9) into the combustion chamber (8) at least one device (13) is arranged which at least supports a swirl (D₂) of the recirculated exhaust gas in the combustion chamber (8), which device is preferably formed by at least one arched shielding edge (15) in the area of the combustion chamber ceiling (14) on one side of the exhaust opening (6), with the intake port (7) and preferably also the exhaust port (9) being arranged as a tangential channel for gases flowing into the combustion chamber (8), and with the intake control time and the exhaust control time being adjustable in a synchronous manner to late at least in the part-load range, **characterized in that** the central flow line (7a) in the region of the intake opening (5) opens with the intake valve axis (2b) an angle (α) > 0 and also the central flow line (9a) of the exhaust port (9) opens an angle (β) > 0 in the region of the outlet opening (6) with the exhaust valve axis (3b).

2. An internal combustion engine according to claim 1, **characterized in that** the swirl (D₂) from the exhaust gas recirculation (S2) from the exhaust port (9) and the swirl (D₁) from the fresh gas flow (S1) from the intake port (7) have the same orientation.

3. An internal combustion engine according to claim 1 or 2, **characterized in that** the central flow line (7a) of the intake port (7) opens an angle (ε₁) of between approx. 80° and 120° in the region of the intake opening (5) with a straight line (r₁) which connects the central point (10b) of the cylinder and the central point (2a) of the valve.

4. An internal combustion engine according to one of the claims 1 to 3, **characterized in that** the central flow line (9a) of the exhaust port (9) opens an angle (ε₂) of between approx. 80° and 120° in the region of the exhaust opening (6) with a straight line (r₂) which connects the central point (10b) of the cylinder and the central point (3a) of the valve.

5. An internal combustion engine according to one of the claims 1 to 4, **characterized in that** the exhaust port (9) and/or the intake port (7) comprises a breakaway edge (19, 20) in the region of the valve seat (12, 21) in the region of the bottom side (9b, 7b) of the port closest to the cylinder head plane (11).

6. An internal combustion engine according to one of the claims 1 to 5, **characterized in that** the upper side (9c) of the exhaust port (9) which is more remote from the cylinder head plane (11) encloses an angle (δ) > 0°, preferably > 30°, with a parallel line (3b') to the valve axis (3b) of the exhaust valve (3).

7. An internal combustion engine according to one of the claims 1 to 6, **characterized in that** the upper side (7c) of the intake port (7) which is more remote from the cylinder head plane (11) encloses an angle (ρ) > 0°, preferably > 30°, with a parallel line (2b') to the valve axis (2b) of the intake valve (2).

8. An internal combustion engine according to one of the claims 1 or 7, **characterized in that** the shielding edge (15) is arranged on a side of the exhaust opening (6) averted from the intake flange (16).

9. An internal combustion engine according to one of the claims 1 to 8, **characterized in that** the shielding edge (15) is arranged on a side of the exhaust opening (6) facing the exhaust flange (17).

10. An internal combustion engine according to one of the claims 1 to 8, **characterized in that** the shielding edge (15) is arranged on a side of the exhaust opening (6) averted from the exhaust flange (17).

11. An internal combustion engine according to one of the claims 1 to 10, **characterized in that** the height h of the shielding edge (15) is smaller than the maximum stroke H of the exhaust valve (9).

12. An internal combustion engine according to one of the claims 1 to 11, **characterized in that** the distance (a) between the shielding edge (15) and the exhaust port (3) is approximately between 0.3 to 1.2 mm.

13. A method for operating an internal combustion engine according to one of the claims 1 to 12, **characterized in that** at partial load by changing the intake control time and/or the exhaust control time an internal recirculation of exhaust gas from the exhaust port (9) to the cylinder (4) is performed, with an asymmetrical exhaust gas recirculation flow (S₂) being generated during the exhaust gas recirculation.

14. A method according to claim 13, **characterized in that** at partial load both the camshaft as well as the intake control time as well as the exhaust control time is displaced to late by a crank angle (KW) of approximately 30° to 100°, preferably 40° to 80°, by a phase displacement of the camshaft.

## Revendications

1. Moteur à combustion à quatre temps comportant au moins une soupape d'admission (2) pour commander un canal d'admission (7) générant un écoulement en rotation et au moins une soupape d'échappement (3) pour commander un canal d'échappement (9) par cylindre (4), dans lequel
- en modifiant les temps de commande de la soupape d'admission (2) et/ou de la soupape d'échappement (3) on réintroduit des gaz d'échappement du canal d'échappement (9) dans le cylindre (4),
- le canal d'échappement (9) est réalisé comme canal générant un mouvement de rotation dans les gaz d'échappement retournant dans la chambre de combustion (8) et/ ou
- au niveau de l'embouchure (6) du canal d'échappement (9) dans la chambre de combustion (8) au moins une installation (13) soutient au moins un mouvement de rotation (D₂) des gaz d'échappement retournant dans la chambre de combustion (8), cette installation étant formée de préférence par au moins une arête de protection (15), de forme courbe, au niveau du dôme (14) de la chambre de combustion, d'un côté de l'orifice d'échappement (6),
- le canal d'admission (7) et de préférence également le canal d'échappement (9) sont réalisés sous la forme de canaux tangentiels pour les gaz échangés avec la chambre de combustion (8), et
- au moins dans la plage des charges partielles, le temps de commande d'admission et le temps de commande d'échappement sont retardés en synchronisme,
**caractérisé en ce que**
l'axe de la veine de fluide (7a) au niveau de l'orifice d'admission (5) fait un angle (α) > 0 avec l'axe de la soupape d'admission (2b) et l'axe de la veine d'écoulement (9a) du canal d'échappement (9) fait un angle (β) > 0 dans la zone de l'orifice d'échappement (6) avec l'axe (3b) de la soupape d'échappement.

2. Moteur à combustion selon la revendication 1,
**caractérisé en ce que**
la rotation (D₂) de la veine de retour de gaz d'échappement (S₂) à partir du canal d'échappement (9) et la rotation (D₁) de l'écoulement des gaz frais (S₁) venant du canal d'admission (7) ont la même orientation.

3. Moteur à combustion selon les revendications 1 ou 2,
**caractérisé en ce que**
l'axe de la veine d'écoulement (7a) du canal d'admission (7) au niveau de l'orifice d'admission (5) fait avec une droite (r₁) reliant le centre (10b) du cylindre et le centre (2a) de la soupape, un angle (si) compris entre 80° et 120°.

4. Moteur à combustion selon l'une des revendications 1 à 3,
**caractérisé en ce que**
l'axe de la veine d'écoulement (9a) du canal d'échappement (9) au niveau de l'orifice d'échappement (6) fait avec une droite (r₂) passant par le centre (10b) du cylindre et le centre (3a) de la soupape, un angle (ε₂) compris entre environ 80° et 120°.

5. Moteur à combustion selon l'une des revendications 1 à 4,
**caractérisé en ce que**
le canal d'échappement (9) et/ou le canal d'admission (7) comporte une arête de décrochement (19, 20) au niveau du siège de soupape (12, 21) dans la zone de la face inférieure (9b, 7b) du canal la plus proche du plan (11) de la culasse.

6. Moteur à combustion selon l'une des revendications 1 à 5,
**caractérisé en ce que**
le côté supérieur (9c) du canal d'échappement (9) éloigné du plan (11) de la culasse fait au niveau du siège de soupape (12) un angle (δ) > 0°, de préférence > 30° avec une parallèle (3b') à l'axe (3b) de la soupape d'échappement (3).

7. Moteur à combustion selon l'une des revendications 1 à 6,
**caractérisé en ce que**
le côté supérieur (7c) du canal d'admission (7) éloigné du plan (11) de la culasse, fait au niveau du siège de soupape (21), un angle (ρ) > 0°, de préférence > 30° avec une parallèle (2b') à l'axe (2b) de la soupape d'admission (2).

8. Moteur à combustion selon les revendications 1 ou 7,
**caractérisé en ce que**
l'arête de protection (15) est prévue sur un côté de l'orifice d'échappement (6) opposé à la bride d'admission (16).

9. Moteur à combustion selon l'une des revendications 1 à 8,
**caractérisé en ce que**
l'arête de protection (15) est prévue sur un côté de l'orifice d'échappement (6) tourné vers la bride d'échappement (17).

10. Moteur à combustion selon l'une des revendications 1 à 8,
**caractérisé en ce que**
l'arête de protection (15) est prévue sur le côté de la bride d'échappement (17) opposé à l'orifice d'échappement (6).

11. Moteur à combustion selon l'une des revendications 1 à 10,
**caractérisé en ce que**
la hauteur (h) de l'arête de protection (15) est inférieure à la course maximale (H) de la soupape d'échappement (3).

12. Moteur à combustion selon l'une des revendications 1 à 11,
**caractérisé en ce que**
la distance (a) entre l'arête de protection (15) et la soupape d'échappement (3) correspond à environ 0,3 jusqu'à 1,2 mm.

13. Procédé de mise en oeuvre d'un moteur à combustion selon l'une des revendications 1 à 12,
**caractérisé en ce que**
pour la charge partielle, par modification du temps de commande d'admission et/ou du temps de commande d'échappement on effectue une réintroduction interne des gaz d'échappement du canal d'échappement (9) dans le cylindre (4), et pendant le retour des gaz d'échappement on génère un écoulement en retour de gaz d'échappement (S₂) non symétrique.

14. Procédé selon la revendication 13,
**caractérisé en ce que**
pour une charge partielle, par un réglage de phase de l'arbre à came on décale dans le sens du retard à la fois le temps de commande d'admission et le temps de commande d'échappement d'un angle de vilebrequin (KW) de l'ordre de 30° à 100°, de préférence compris entre 40° et 80°.
